# FASCICULE DE BREVET EUROPEEN

(11) **EP 3 717 220 B1**
(45) Date de publication et mention de la délivrance du brevet: **30.08.2023**
(21) Numéro de dépôt: 18816254.9
(22) Date de dépôt: 27.11.2018
(51) Int. Cl.: B29D 30/06

(54) **ELEMENTS MOULANTS COMPORTANT UN MOYEN D'ASSEMBLAGE PARTICULIER**
FORMELEMENTE MIT EINEM BESONDEREN MONTAGEMITTEL
MOULDING ELEMENTS COMPRISING A PARTICULAR ASSEMBLY MEANS

(30) Priorité: 30.11.2017 FR 1771286
(43) Date de publication de la demande: 07.10.2020
(73) Titulaire: Compagnie Générale des Etablissements Michelin, 63000 Clermont-Ferrand (FR)
(72) Inventeur: CHIGROS, Pierre, 63040 Clermont-Ferrand Cedex 09 (FR); BARDIN, Damien, 63040 Clermont-Ferrand Cedex 09 (FR)
(74) Mandataire: Noel, Luminita
(86) Numéro de dépôt international: PCT/IB2018/059360
(87) Numéro de publication internationale: WO 2019/106538

(56) Documents cités:
- EP-A1- 0 858 875
- WO-A1-2015/086974
- WO-A1-2016/200695
- US-A1- 2007 295 434

## Description

### DOMAINE TECHNIQUE DE L'INVENTION

L'invention concerne un ensemble d'éléments moulants formant un réseau d'éléments moulants dans un moule pour la vulcanisation d'une bande de roulement d'un pneumatique.

### ÉTAT DE LA TECHNIQUE ANTERIEURE

Le document WO2016200695 décrit un ensemble d'éléments moulants pour une garniture d'un moule destiné à la vulcanisation d'une bande de roulement d'un pneumatique. Les éléments moulants sont assemblés les uns aux autres par l'entremise d'une encoche dans laquelle un bord de l'élément à assembler est inséré. Pour réaliser cet assemblage, l'interface de contact entre les éléments moulants à assembler doit être plane ou dépourvue de tout relief. Si un relief est présent sur une face d'un élément moulant, ce dernier est interrompu au niveau de la zone d'assemblage, créant ainsi une discontinuité ou interruption, susceptible d'affaiblir l'élément moulant sur lequel la discontinuité est présente.

Le document EP0858875 décrit un moule en deux parties destiné au moulage d'une bande de roulement de pneumatique. Chaque partie du moule comporte des matrices de moulage adaptées pour être assemblées l'une contre l'autre, par leurs extrémités.

Le document US2007/295434 décrit des lamelles de moule pour pneumatique agencées pour un assemblage croisé. L'assemblage est mis en oeuvre en découpant une des lamelles en deux portions qui sont ensuite soudées à la lamelle principale.

Le document WO2015086974 décrit un élément moulant pour un moule de pneumatique. L'élément moulant principal comprend une face plane sur laquelle une extrémité d'une lamelle secondaire s'emboite dans un fente d'assemblage spécifiquement prévue.

### DÉFINITIONS

Par « pneumatique », on entend tous les types de bandages élastiques soumis à une pression interne ou non.

Par « bande de roulement » d'un pneumatique, on entend une quantité de matériau en caoutchouc délimitée par des surfaces latérales et par deux surfaces principales dont l'une est destinée à entrer en contact avec une chaussée lorsque le pneumatique roule et l'autre est orienté vers l'intérieur du pneu.

Par « découpure dans une bande de roulement » on entend soit une découpure fine également appelée incision, soit une découpure large également appelée rainure.

Par « élément moulant », on entend un élément disposé dans un moule apte à réaliser des découpures dans la bande de roulement d'un pneumatique. Un élément moulant apte à réaliser une incision dans la bande de roulement est appelé une lamelle. Un élément moulant apte à réaliser une rainure dans la bande de roulement est appelé un cordon.

### EXPOSE DE L'INVENTION

Tout d'abord, un premier objectif de l'invention consiste à prévoir une mode d'assemblage entre des éléments moulant permettant de prendre en compte des zones pourvues de formes, reliefs ou textures particulières à l'interface de la zone d'assemblage.

Un deuxième objectif de l'invention consiste à proposer un mode d'assemblage entre des éléments de moulage permettant d'effectuer un assemblage efficace et fiable sans affecter la rigidité de l'un ou l'autre des éléments assemblés.

Pour ce faire, la présente description prévoit un élément moulant destiné à être rapporté dans un moule pour la vulcanisation d'une bande de roulement d'un pneumatique, ledit élément moulant comportant un bord sur une extrémité dudit élément moulant, ledit bord étant adapté pour venir en contact avec l'autre élément moulant, ledit bord comprenant au moins une partie en retrait, ladite partie en retrait étant adaptée pour être complémentaire avec une zone de l'autre élément moulant, ladite zone de contact étant non plane.

Un tel mode d'assemblage entre les éléments moulant permet d'assurer la continuité de tout élément, comme par exemple une ondulation, une texture, ou autre, présent sur une face d'assemblage de l'élément moulant principal. Par exemple, dans le cas d'une ondulation servant à rigidifier l'élément de moulage principal, les caractéristiques de l'invention permettent d'assurer la continuité de l'effet de rigidification.

Selon un mode de réalisation avantageux, l'élément moulant comporte des moyens d'assemblage pour l'assemblage dudit élément moulant avec l'autre élément moulant. Ces moyens d'assemblage facilitent la mise en oeuvre des éléments moulants, et leur mise en place dans un moule.

De manière avantageuse, la partie en retrait est curviligne.

Egalement de manière avantageuse, les moyens d'assemblage font protubérance par rapport au bord dudit élément moulant.

L'invention est définie par un ensemble d'éléments moulants selon la revendication 1.

Selon un mode de réalisation avantageux, l'élément principal comprend une texture (comme par exemple une suite de picots, de lames ou des trous pour générer des poils), ladite texture traversant, sans être interrompue, la zone de contact.

De manière avantageuse, ledit ensemble comprend des moyens d'assemblage.

Egalement de manière avantageuse, les moyens d'assemblage comprennent une encoche dans l'élément principal pour la réception d'une partie du bord de l'élément secondaire.

Selon un mode de réalisation avantageux, les moyens d'assemblage comportent au moins une protubérance fait saillie à partir du bord de l'élément secondaire.

Selon un mode de réalisation avantageux, les éléments moulants sont des lamelles.

L'invention prévoit également un moule pour la vulcanisation d'une bande de roulement d'un pneumatique, comportant une pluralité d'ensembles d'éléments moulants tels que préalablement décrits.

### DESCRIPTION DES FIGURES

D'autres caractéristiques et avantages de l'invention ressortiront de la description suivante, donnée à titre d'exemple, en regard des dessins annexés sur lesquels :
- la figure 1 est une vue en perspective d'un exemple d'ensemble d'éléments moulants comprenant un élément moulant principal et un élément moulant secondaire,
- les figures 2a, 2b et 2c sont des vues latérales de variantes de réalisation de l'élément moulant secondaire de la figure 1.

Dans la description qui va suivre, des éléments sensiblement identiques ou similaires seront désignés par des références identiques.

### DESCRIPTION DETAILLEE DE L'INVENTION

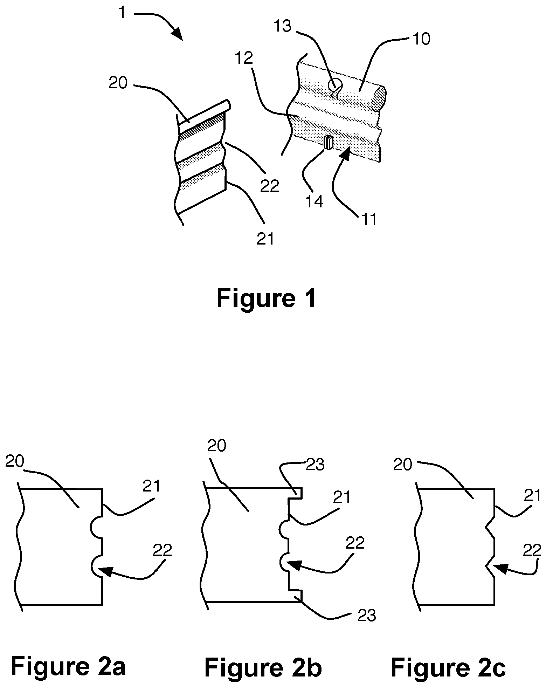

La figure 1 illustre un exemple de réalisation d'un ensemble d'éléments moulants servant au moulage de découpures dans une bande de roulement d'un pneumatique. L'exemple illustré est constitué d'un élément moulant principal 10 et d'un élément moulant secondaire 20.

Sur au moins une de ses faces, l'élément moulant principal 10 comporte une zone de contact 11. Cette zone est prévue pour être en contact avec un bord 21 de l'élément moulant secondaire 20.

Tel qu'illustré à la figure 1, la zone de contact 11 est non plane. Elle comporte par exemple au moins une ondulation 12. Cette ondulation 12 s'étend de façon continue tout le long de la zone de contact 11, sans interruption. L'absence d'interruption de cette ondulation permet d'éviter les zones de fragilité sur l'élément moulant principal 10. Selon une variante non illustrée, la zone de contact comprend une texture, (comme par exemple une suite de picots, de lames ou des trous pour générer des poils). Cette texture traverse la zone de contact de façon continue, sans interruption. Quel que soit le type de relief utilisé, celui-ci se prolonge de façon continue sur toute la longueur de la zone de contact 11.

Afin de réaliser un assemblage des deux éléments moulants 10 et 20 sensiblement sans espacement ou vide dans la zone d'interface entre les deux éléments moulants, la zone de contact 11 et le bord 21 sont prévus avec des profils complémentaires. Le contour ou le profil du bord 21 épouse tout ou partie du relief de la zone de contact 11. On obtient ainsi un assemblage avec un contact entre les deux éléments moulants sur sensiblement toute la longueur de cette zone de contact.

Dans l'exemple illustré, la continuité entre les deux profils assemblés est mise en oeuvre grâce à un agencement particulier prévu au niveau d'au moins un des bords 21 de l'élément moulant secondaire 20. Le bord 21 comporte au moins une partie 22 en retrait. La découpe correspond au profil de la surface non plane de la zone de contact 11 de l'élément moulant principal 10.

Dans les exemples illustrés aux figures 1, 2a et 2b, la partie 22 en retrait de l'élément moulant est curviligne, et forme un profil complémentaire à celui de l'ondulation 12 de l'élément moulant principal. La partie 22 en retrait a donc un profil qui s'adapte parfaitement à celui de la face de contact 11 de l'élément moulant principal 10.

La figure 2c illustre une variante de profil d'un bord 21 dont la ou les parties 22 en retrait sont en forme de triangle. D'autres formes sont encore possibles pour les parties en retrait, en fonction de la configuration de la zone non plane 11 de l'élément moulant principal avec lequel l'assemblage est prévu.

### MOYENS D'ASSEMBLAGE

Afin d'assembler les éléments moulant 10 et 20, l'élément moulant principal 10 et/ou l'élément moulant secondaire 20 peuvent comporter des moyens d'assemblage, tel que montré dans les exemples des figures 1 et 2b.

Dans l'exemple de la figure 2b, le bord 21 de l'élément secondaire comprend une ou des protubérances 23, s'étendant du bord, et s'avançant vers la lamelle principale 10 pour coopérer avec cette dernière. Une telle protubérance peut par exemple coopérer avec la lamelle principale 10 par insertion dans une encoche 13, telle que celle illustrée dans l'exemple de la figure 1. Il en résulte un assemblage précis, avec un alignement des éléments moulants rigoureusement mis en oeuvre.

Une pince 14, s'avançant de la zone de contact 11 d'un élément moulant principal 10, dans une direction sensiblement perpendiculaire à ce dernier, peut également permettre de fixer un élément moulant secondaire. Une ou plusieurs pinces 14 peuvent être prévues. Plusieurs pinces 14 peuvent être alignées sur la zone de contact pour fixer un bord 21 par plusieurs points, pour un assemblage particulièrement efficace.

Encore en variante, un assemblage peut prévoir à la fois une ou plusieurs pinces 14 et une ou plusieurs protubérances 23.

### Numéros de référence employés sur les figures

- 1: Ensemble d'éléments moulants

- 10: Elément moulant principal
- 11: Zone de contact
- 12: Ondulation
- 13: Encoche
- 14: Pince

- 20: Elément moulant secondaire
- 21: Bord
- 22: Partie en retrait
- 23: Moyens d'assemblage

## Revendications

1. Ensemble (1) d'éléments moulants (10, 20) destiné à être rapporté dans un moule pour la vulcanisation d'une bande de roulement d'un pneumatique, ledit ensemble comportant un élément moulant principal (10) et un élément moulant secondaire (20) comportant un bord (21), ledit élément moulant principal (10) comportant, sur au moins une de ses faces, une zone de contact (11) adaptée pour être en contact avec tout ou partie du bord (21) de l'élément secondaire, **caractérisé en ce que** ladite zone de contact (11) comprend au moins deux ondulations (12) traversant sans interruption la zone de contact (11) le bord (21) dudit élément moulant secondaire (20) comportant au moins deux découpes (22) formant un profil complémentaire à celui des ondulations (12).

2. Ensemble d'éléments moulants selon la revendication 1, **caractérisé en ce que** l'élément principal (10) comprend une texture, ladite texture traversant, sans interruption, la zone de contact.

3. Ensemble d'éléments moulants selon l'une quelconque des revendication 1 ou 2, **caractérisé en ce que** ledit ensemble comprend des moyens d'assemblage (13, 23) pour assembler l'élément moulant secondaire (20) à l'élément moulant principal (10).

4. Ensemble d'éléments moulants selon la revendication 3, dans lequel les moyens d'assemblage comprennent une encoche (13) dans l'élément principal (10) pour la réception d'une partie du bord (21) de l'élément secondaire.

5. Ensemble d'éléments moulants selon la revendication 3, dans lequel les moyens d'assemblage comportent au moins une protubérance (23) faisant saillie à partir du bord (21) de l'élément secondaire.

6. Ensemble d'éléments moulants selon l'une quelconque des revendications 1 à 5, dans lequel les éléments moulants (10, 20) sont des lamelles.

7. Moule pour la vulcanisation d'une bande de roulement d'un pneumatique, comportant une pluralité d'ensembles d'éléments moulants (10, 20) selon l'une quelconque des revendications 1 à 6.

## Patentansprüche

1. Anordnung (1) von Formelementen (10, 20), die dazu bestimmt ist, in eine Form zur Vulkanisierung eines Laufstreifens eines Reifens eingesetzt zu werden, wobei die Anordnung ein Hauptformelement (10) und ein Nebenformelement (20) mit einem Rand (21) aufweist, wobei das Hauptformelement (10) auf mindestens einer seiner Seiten einen Kontaktbereich (11) aufweist, der dazu ausgelegt ist, mit dem gesamten Rand (21) des Nebenelements oder einem Teil davon in Kontakt zu stehen, **dadurch gekennzeichnet, dass** der Kontaktbereich (11) mindestens zwei Wellen (12) umfasst, die ohne Unterbrechung durch den Kontaktbereich (11) verlaufen, wobei der Rand (21) des Nebenformelements (20) mindestens zwei Ausschnitte (22) umfasst, die ein Profil bilden, das komplementär zu dem der Wellen (12) ist.

2. Anordnung von Formelementen nach Anspruch 1, **dadurch gekennzeichnet, dass** das Hauptelement (10) eine Textur umfasst, wobei die Textur ohne Unterbrechung durch den Kontaktbereich verläuft.

3. Anordnung von Formelementen nach einem der Ansprüche 1 oder 2, **dadurch gekennzeichnet, dass** die Anordnung Verbindungsmittel (13, 23) zum Verbinden des Nebenformelements (20) mit dem Hauptformelement (10) umfasst.

4. Anordnung von Formelementen nach Anspruch 3, wobei die Verbindungsmittel eine Kerbe (13) im Hauptelement (10) zur Aufnahme eines Teils des Randes (21) des Nebenelements umfassen.

5. Anordnung von Formelementen nach Anspruch 3, wobei die Verbindungsmittel mindestens einen Vorsprung (23) umfassen, der vom Rand (21) des Nebenelements vorsteht.

6. Anordnung von Formelementen nach einem der Ansprüche 1 bis 5, wobei es sich bei den Formelementen (10, 20) um Lamellen handelt.

7. Form zur Vulkanisierung eines Laufstreifens eines Reifens, die mehrere Anordnungen von Formelementen (10, 20) nach einem der Ansprüche 1 bis 6 aufweist.

## Claims

1. Set (1) of moulding elements (10, 20) intended to be added to a mould for vulcanizing a tyre tread, said set comprising a main moulding element (10) and a secondary moulding element (20) comprising an edge (21), said main moulding element (10) comprising, on at least one of its faces, a contact zone (11) adapted to be in contact with all or part of the edge (21) of the secondary element, **characterized in that** said contact zone (11) comprises at least two undulations (12), said undulations crossing without interruption the contact zone (11), the edge (21) of said secondary moulding element (20) comprising at least two recessed portions (22) forming a profile complementary to the profile of the undulations 12.

2. Set of moulding elements according to Claim 1, **characterized in that** the main element (10) comprises a texture, said texture crossing, without interruption, the contact zone.

3. Set of moulding elements according to any one of Claims 1 to 2, **characterized in that** said set comprises assembly means (13, 23) for assembling the secondary moulding element (20) to the main moulding element (10).

4. Set of moulding elements according to Claim 3, in which the assembly means comprise a notch (13) in the main element (10) for receiving part of the edge (21) of the secondary element.

5. Set of moulding elements according to Claim 3, in which the assembly means comprise at least one protrusion (23) protruding from the edge (21) of the secondary element.

6. Set of moulding elements according to any one of Claims 1 to 5, in which the moulding elements (10, 20) are blades.

7. Mould for vulcanizing a tyre tread, comprising a plurality of sets of moulding elements (10, 20) according to any one of Claims 1 to 6.
